# EUROPÄISCHE PATENTSCHRIFT

(11) **EP 1 295 508 B1**
(45) Veröffentlichungstag und Bekanntmachung des Hinweises auf die Patenterteilung: **20.04.2005**
(21) Anmeldenummer: 00938437.1
(22) Anmeldetag: 30.06.2000
(51) Int. Cl.: H04R 25/00

(54) **VERFAHREN ZUR HERSTELLUNG VON IM-OHR-HÖRGERÄTEN UND IM-OHR-HÖRGERÄT**
METHOD FOR PRODUCING IN-EAR HEARING AIDS AND IN-EAR HEARING AID
PROCEDE DE FABRICATION D'APPAREILS AUDITIFS ET APPAREIL AUDITIF Y RELATIF

(43) Veröffentlichungstag der Anmeldung: 26.03.2003
(73) Patentinhaber: PHONAK AG, 8712 Stäfa (CH)
(72) Erfinder: WIDMER, Christoph, CH-8712 Stäfa (CH); DUTTA, Joydeep, CH-1009 Pully (CH)
(74) Vertreter: Troesch Scheidegger Werner AG
(86) Internationale Anmeldenummer: PCT/CH2000/000356
(87) Internationale Veröffentlichungsnummer: WO 2002/003756

(56) Entgegenhaltungen:
- WO-A-00/34739
- BE-A- 1 010 200
- US-A- 5 056 204
- US-A- 5 487 012

## Beschreibung

Die vorliegende Erfindung betrifft ein Verfahren nach dem Oberbegriff von Anspruch 1.

Bei der Fertigung von Im-Ohr-Hörgeräte-Schalen wird heute üblicherweise vom Audiologen die Form des individuellen Gehörganges genommen, durch Erstellen eines Abdruckes, üblicherweise aus Silikon.

Diese Form wird anschliessend an den Hörgeräteproduzenten übersandt, wo auf der Basis dieser Form die Hörgeräteschale aus einem Kunststoff gegossen wird.

Dieses vorgehen ist unter verschiedenen Aspekten problematisch:
- Beim Fertigungsverfahren auf der Basis des obgenannten Aussenohr-Abdruckes müssen Kunststoffmaterialien eingesetzt werden, welche zu relativ harten, formstabilen Schalen führen. Dies führt beim Einsetzen des fertig gestellten Im-Ohr-Hörgerätes ins individuelle Ohr praktisch immer dazu, dass die Schale aufgrund verbleibender Druckstellen überarbeitet werden muss. Da die Anprobe üblicherweise nicht beim Produzenten erfolgt, ist oft ein langwieriges Hin und Her erforderlich, bis die Schale individuell passt.
- Wohl ermöglicht das obgenannte Vorgehen eine abdruckentsprechende Aussenformung der resultierenden Schale, nicht aber das Ausbilden komplexer Innenformen, wie dies für die montageoptimierte Aufnahme von Funktionsteilen des Hörgerätes wünschbar wäre. Unter Funktionsteilen verstehen wir dabei sämtliche Aggregate, welche für die Aufnahme, Verarbeitung und Wiederausgabe der Audiosignale verantwortlich sind, also von Mikrophonen, Digitalprozessoren, Lautsprecher und den zugeordneten Hilfsaggregaten, wie für Fernsteuerung binauraler Signalübertragung, Batterien etc. Dabei ist darauf hinzuweisen, dass eine optimale Packung dieser Funktionsteile unter Ausnützung des zur Verfügung stehenden Platzes nur individuell vorgenommen werden kann, denn die Geometrie des Gehörganges kann individuell stark schwanken.

Das geschilderte Vorgehen ist einerseits höchst arbeitsintensiv, und das resultierende Hörgerät bleibt von seinem Tragkomfort sowie von der Platznutzung her betrachtet meistens suboptimal. Die beim erwähnten herkömmlichen Fertigungsverfahren eingesetzten Materialien bedingen auch eine relativ hohe Wandstärke der Im-Ohr-Hörgeräteschale, was den für die erwähnten funktionellen Teile zur Verfügung stehenden Raum weiter als dies ohnehin der Fall ist reduziert.

Aus der US-A-5 487 012 ist ein Verfahren eingangs genannter Art bekannt. Dabei werden zwei Vorgehensweisen nebeneinander gestellt, nämlich gemäss eingangs genanntem Verfahren einerseits, einem additiven Verfahren, andererseits gemäss einem Verfahren, subtraktives, bei welchem die Hörgeräteschale aus dem Vollen gearbeitet wird.

Das eingesetzte additive Verfahren ist eines der Verfahren, die auch unter dem Begriff "Rapid Prototyping" bekannt sind.

Aufgabe der vorliegenden Erfindung ist es, das vorgenannte Verfahren in für die industrielle Fertigung geeignete Form weiter zu bilden.

Dies wird durch dessen Ausführung nach dem Kennzeichen von Anspruch 1 erreicht.

Bezüglich im schnellen Prototypenbau eingesetzter oder sich noch in Entwicklung befindlicher additiver Verfahren wird z.B. auf
- http://ltk.hut.fi/∼koukka/RP/rptree.html (1) oder auf
- Wohlers Report 2000, Rapid Prototyping
   & Tooling State of the industry (2)
verwiesen.

Von den für den schnellen Prototypenbau heute bekannten additiven Verfahren ergibt sich, dass Lasersintern, Laser- bzw. Stereolitographie oder das Thermojet-Verfahren sich besonders gut eignen, die obgenannte Aufgabe zu lösen.

Diese und weitere additive Aufbauverfahren aus dem "Rapid Prototyping" sind an sich bekannt. Deshalb nur kurz zusammenfassend Spezifikationen der bevorzugt eingesetzten additiven Aufbauverfahren:
- Lasersintern:
   Aus einem Pulverbett wird, beispielsweise mittels eines Rollers, Heissschmelz-Pulver in einer dünnen Schicht aufgetragen. Mittels eines Laserstrahls wird die Pulverschicht verfestigt, wobei der Laserstrahl entsprechend einer Schnittschicht der Hörgeräteschale mittels 3D-Forminformation der Hörgeräteschale, angesteuert wird. Es entsteht in dem im übrigen losen Pulver eine verfestigte Schnittschicht der Schale. Diese wird aus der Pulververlegeebene abgesenkt und darüber eine neue Pulverschicht aufgebracht, wiederum einer Schnittschicht entsprechend laserverfestigt etc.
- Laser- bzw. Stereolithographie:
   Eine erste Schnittkontur entsprechend einer Schnittschicht einer Hörgeräteschale wird mittels UV-Laser an der Oberfläche flüssigen Photopolymers verfestigt. Die verfestigte Schicht wird abgesenkt, wird wieder von Flüssigpolymer bedeckt und mittels UV-Laser wird die zweite Schnittschicht verfestigt.
- Thermojetverfahren:
   Die Konturbildung entsprechend einer Schnittschicht wird ähnlich wie bei einem Tintenstrahldrucker durch Flüssigauftrag gemäss der digitalisierten 3D-Forminformation vorgenommen. Danach wird die abgelegte Schnitt-"Zeichnung" verfestigt.
   Wiederum wird gemäss dem Prinzip der additiven Aufbauverfahren Schicht um Schicht zum Aufbau der Geräteschale abgelegt.
   Es kann bezüglich additiver Aufbauverfahren und der obgenannten bevorzugten, auf folgende weitere Veröffentlichungen hingewiesen werden:
      - http://www.padtinc.com/srv_rpm_sls.html (3)
      - "Selective Laser Sintering (SLS) of Ceramics",
         Muskesh Agarwala et al., presented at the
         Solid Freeform Fabrication Symposium, Austin,
         TX, August 1999, (4)
      - http://www.caip.rutgers.edu/RP_Library/process.html (5)
      - http://www.biba.uni-bremen.de/groups/rp/lom.html bzw.
      - http://www.biba.uni-bremen.de/groups/rp/rp_intro.html (6)
      - Donald Klosterman et al., "Direct Fabrication of Polymer Composite Structures with Curved LOM", Solid Freeform Fabrication Symposium, University of Texas at Austin, August 1999, (7)
      - http://lff.me.utexas.edu/sls.html (8)
      - http://www.padtinc.com/srv_rpm_sla.html (9)
      - http://www.cs.hut.fi/∼ado/rp/rp.html (10)

Grundsätzlich wird bei additiven Aufbauverfahren jeweils eine dünne Materialschicht auf einer Fläche abgelegt, sei dies, wie beim Lasersintern oder Stereolitographie-Verfahren, ganzflächig, sei dies, wie beim Thermojetverfahren, bereits in der Kontur eines Schnittes der im Aufbau begriffenen Schale. Daraufhin wird die erwünschte Schnittform stabilisiert bzw. verfestigt.

Ist eine Schicht verfestigt, so wird darüber eine neue Schicht wie beschrieben abgelegt und diese wiederum verfestigt und mit der darunter liegenden, schon fertiggestellten Schicht verbunden. So wird Schicht um Schicht die Hörgeräteschale erstellt, durch additives Schicht-um-Schicht-Auftragen.

Für die industrielle Fertigung wird nun jeweils nicht nur die Schnittschicht für eine Hörgeräteschale abgelegt bzw. verfestigt, sondern gleichzeitig mehrere. Bei Lasersintern verfestigt der Laser, üblicherweise spiegelgesteuert, hintereinander die Schnittschichten mehrerer Hörgeräteschalen, bevor alle verfestigten Schnittschichten gemeinsam abgesenkt werden. Daraufhin, nach Ablegen einer neuen Pulverschicht über alle bereits verfestigten und abgesenkten Schnittschichten, erfolgt wiederum die Bildung der mehreren weiteren Schnittschichten.

Zur Verfestigung der Hörgeräteschalen-Schnittschichten wird entweder weiterhin ein einziger Laserstrahl eingesetzt, oder mehr als ein Strahl werden parallel betriebene.

Eine Alternative zu diesem Vorgehen besteht darin, jeweils mit einem Laser eine Schnittschicht zu verfestigen, während gleichzeitig für die Bildung einer weiteren Hörgeräteschale die Pulverschicht abgelegt wird. Danach wird mit dem nämlichen Laser die bereitete Pulverschicht entsprechend der Schnittschicht für die weitere Hörgeräteschale verfestigt, während die davor verfestigte Schicht abgesenkt und dort eine neue Pulverschicht abgelegt wird. Der Laser arbeitet dann intermittierend zwischen zwei oder mehreren im Aufbau begriffenen Hörgeräteschalen, wobei die durch die Pulverablage bei der Bildung einer der Schalen entstehende Lasereinsatz-Totzeit für die Verfestigung einer Schnittschicht einer andern im Aufbau begriffenen Schale ausgenützt wird.

In analoger Art und Weise wird die Produktivität bei Einsatz von Stereolithopraphie erhöht. Beim Einsatz des Thermojetverfahrens und zur analogen Produktivitätserhöhung werden gleichzeitig Schnittschichten von mehr als einer Hörgeräteschale abgelegt.

Durch das erfindungsgemässe Verfahren ist es nun möglich, höchst komplexe Formen an der erfindungsgemäss gefertigten Schale zu realisieren, und zwar sowohl, was ihre Aussenformung wie auch, was ihre Innenformung anbelangt. Überhänge, Ein- und Aussprünge können ohne weiteres realisiert werden.

Im weiteren sind Materialien für additive Aufbauverfahren bekannt, welche zu einer gummielastischen und doch formstabilen Schale führen, die falls erwünscht lokal unterschiedlich bis zu äusserst dünnwandig und trotzdem reissstabil realisiert werden kann.

In einer heute bevorzugten Ausführungsform wird im Zuge des erfindungsgemässen Herstellungsverfahrens die Form des individuellen Gehörganges durch Erstellen eines Abdruckes, beispielsweise aus Silikon, vorgenommen, wobei nicht auszuschliessen ist, in näherer Zukunft den individuellen Gehörgang direkt formnehmend abzutasten.

In einer bevorzugten Ausführungsform des erfindungsgemässen Fertigungsverfahrens wird weiter die erwähnte Digitalisierung des Gehörganges, sei dies durch Abdrucknahme, sei dies durch direktes Abtasten an dezentralen Frontzentren, wie beispielsweise bei den Audiologen, vorgenommen. Die dort aufgenommene Form in Darstellung digitaler 3D-Information wird an ein Produktionszentrum übermittelt, sei dies durch Übersendung eines Datenträgers, sei dies durch eine Internet-Verbindung etc. Im Produktionszentrum wird insbesondere unter Einsatz der oben erwähnten Verfahren die Hörgeräteschale individuell geformt. Bevorzugterweise wird auch dort die Fertigassemblierung des Hörgerätes mit den funktionellen Baugruppen vorgenommen.

Aufgrund der Tatsache, dass, wie erwähnt, die eingesetzten Thermoplast-Materialien im allgemeinen zu einer relativ elastischen, sich anschmiegenden Schale führen, ist auch die Formgebung bezüglich Druckstellen weit weniger kritisch, als dies bis anhin der Fall war. Ähnlich einem gummielastischen Pfropfen wird sich die Schale des fertiggestellten Im-Ohr-Hörgerätes optimal an das Aussenohr anpassen. Ohne weiteres ist dabei das Einarbeiten eines oder mehrerer Entlüftungskanäle in die Hörgeräteschale möglich und erwünscht, um beim resultierenden, relativ dichten Sitz des Hörgerätes im Gehörgang eine unbeeinträchtigte Belüftung zum Trommelfell zu ermöglichen. Dabei kann, mit den individuellen 3D-Form-Daten, auch der Innenraum der Schale optimal und individuell geformt werden für die optimale Aufnahme der jeweils individuell vorzusehenden Funktionsteile.

Im weiteren kann durch die zentrale Schalenfertigung auch eine zentrale Abspeicherung und Verwaltung der Individualhörgerätedaten vorgenommen werden, inklusive der Daten, welche die Hörgeräteschalenform definieren. Muss, aus welchen Gründen auch immer, eine Schale ersetzt werden, so kann sie mithin ohne weiteres wieder erstellt werden durch Abruf der entsprechenden individuellen Datensätze und neuerliche Fertigung.

Aufgrund der Tatsache, dass die erfindungsgemäss für die Fertigung von Hörgeräteschalen eingesetzten Verfahren, allerdings aus dem Prototypenbau, weitest verbreitet sind und in der Literatur beschrieben sind, erübrigt sich an dieser Stelle eine Wiedergabe aller technischer Einzelheiten bezüglich dieser Verfahren.

Jedenfalls ergeben sich überraschenderweise aus Übernahme dieser aus dem Prototypenbau vorbekannten Technologie für die industrielle und kommerziell vertretbare Fertigung von Im-Ohr-Hörgerätenschalen ganz wesentliche Vorteile, und zwar aus Gründen, die an sich im Prototypenbau nicht massgebend sind, wie z.B. Elastizität der verwendbaren thermoplastischen Materialien, der Möglichkeit, höchst dünnwandig individuell zu bauen etc.

## Patentansprüche

1. Verfahren zur Herstellung von Im-Ohr-Hörgeräten, bei dem
• vom individuellen Gehörgang Form genommen wird,
• eine Hörgeräteschale entsprechend der Form gefertigt wird,
• Funktionsteile des Hörgerätes eingebaut werden,
dabei die Form in 3D digitalisiert wird und die Hörgeräteschale damit durch ein additives Aufbauverfahren, bei dem eine Schnittschicht um die andere aufeinander abgelegt wird, erstellt wird, **dadurch gekennzeichnet, dass** erst Schnittschichten mehrerer individueller Hörgeräteschalen jeweils quasi parallel erstellt werden, bevor die folgenden Schnittschichten der individuellen Hörgeräteschalen im additiven Aufbauverfahren auf die bereits erstellten abgelegt werden.

2. Verfahren nach Anspruch 1, **dadurch gekennzeichnet, dass** vom Gehörgang ein Abdruck erstellt wird, dieser abgetastet wird und das Abtastsignal digitalisiert wird.

3. Verfahren nach einem der Ansprüche 1 oder 2, **dadurch gekennzeichnet, dass** die Digitalisierung der Form an verteilten Frontzentren vorgenommen wird, die der Form entsprechenden Daten an ein Produktionszentrum übermittelt werden, wo mindestens die Hörgeräteschale erstellt wird.

4. Verfahren nach einem der Ansprüche 1 bis 3, **dadurch gekennzeichnet, dass** als additives Aufbauverfahren Lasersintern, Stereolitographie oder ein Thermojet-Verfahren eingesetzt wird.

## Claims

1. Method for producing in-the-ear hearing devices, in which
• a mould in the shape of the individual auditory canal is made,
• a hearing device shell corresponding to the mould is produced,
• functional parts of the hearing device are installed,
wherein the shape is digitized in 3D and the hearing device shell is thus created by an additive construction method, in which one sectional layer after the other is deposited on top of one another, **characterized in that** firstly sectional layers of a plurality of individual hearing device shells are respectively created virtually in parallel, before the following sectional layers of the individual hearing device shells are deposited on already created layers in the additive construction method.

2. Method according to Claim 1, **characterized in that** an impression is taken of the auditory canal, is scanned and the scanning signal is digitized.

3. Method according to one of Claims 1 and 2, **characterized in that** the digitization of the shape is performed at distributed front centres, the data corresponding to the mould are transmitted to a production centre, where at least the hearing device shell is created.

4. Method according to one of Claims 1 to 3, **characterized in that** laser sintering, stereolithography or a thermojet method is used as the additive construction method.

## Revendications

1. Procédé de fabrication d'appareils auditifs dans l'oreille, dans lequel
• un moule est réalisé du conduit auditif individuel,
• une coque d'appareil auditif est fabriquée conformément au moule,
• des parties fonctionnelles de l'appareil auditif sont installées,
ce faisant le moule est numérisé en 3D, et la coque de l'appareil auditif est ainsi constituée par un procédé de montage additif, dans lequel une couche de coupe est déposée successivement sur l'autre, **caractérisé en ce que** sont réalisées d'abord des couches de coupe de plusieurs coques d'appareils auditifs individuels respectivement sensiblement parallèles avant que les couches de coupe suivantes des coques d'appareils auditifs individuels soient déposées lors du procédé de montage additif sur celles déjà réalisées.

2. Procédé selon la revendication 1, **caractérisé en ce qu'**une empreinte est faite du conduit auditif, que celle-ci est balayée et que le signal de balayage est numérisé.

3. Procédé selon l'une des revendications 1 ou 2, **caractérisé en ce que** la numérisation du moule est effectuée à des centres frontaux répartis, que les données correspondant au moule sont transmises à un centre de production où au moins une coque d'appareil auditif est fabriquée.

4. Procédé selon l'une des revendications 1 à 3, **caractérisé en ce qu'**on utilise comme procédé de montage additif le frittage à laser, la stéréolithographie ou un procédé à jet thermique.
